# EUROPEAN PATENT SPECIFICATION

(11) **EP 2 518 780 B1**
(45) Date of publication and mention of the grant of the patent: **26.02.2020**
(21) Application number: 10838670.7
(22) Date of filing: 21.12.2010
(51) Int. Cl.: H02S 40/44, F24S 10/90, F28D 15/02

(54) **SOLAR PHOTOVOLTAIC CELL HIGH EFFICIENCY RADIATING DEVICE AND COMBINATION HEAT POWER SYSTEM**
HOCHLEISTUNGSSTRAHLUNGSVORRICHTUNG FÜR EINE PV-ZELLE UND KWK-SYSTEM
DISPOSITIF DE RAYONNEMENT À CELLULE SOLAIRE PHOTOVOLTAÏQUE DE HAUTE EFFICACITÉ ET SYSTÈME D'ÉNERGIE THERMIQUE DE COMBINAISON

(30) Priority: 25.12.2009 CN 200910260246
(43) Date of publication of application: 31.10.2012
(73) Proprietor: Changzhou Hetong Purun Energy Technology, Co. Ltd., Changzhou, Jiangsu (CN)
(72) Inventor: ZHAO, Yaohua, Beijing 100020 (CN); ZHANG, Kairong, Beijing 100020 (CN); DIAO, Yanhua, Beijing 100124 (CN)
(74) Representative: Grünecker Patent- und Rechtsanwälte PartG mbB
(86) International application number: PCT/CN2010/080068
(87) International publication number: WO 2011/076107

(56) References cited:
- CN-A- 101 764 167
- CN-U- 201 655 823
- CN-Y- 201 349 013
- CN-Y- 201 368 606
- US-A- 4 474 170

## Description

### Technical Field

The invention relates to the field of solar utilization technology, particularly relates to an efficient heat sink for solar photovoltaic cells and a combined heat and power generation system employing the heat sink.

### Background Art

The maximum photoelectric conversion efficiency of a general commercially available photovoltaic cell is only about 15%, and most of the unemployed solar radiation energy is absorbed by the cell and converted into heat. If the absorbed heat cannot be utilized (as waste heat) or not be removed in time, the cell temperature will increase gradually and the power generation efficiency will be decreased. Furthermore, the service life of the photovoltaic cell will be shortened due to rapid aging resulting from persistent working at high temperatures. Even for the traditional solar power generation cell of non focusing type, its cell temperature usually reaches 70-80° *C* in seasons other than winter, and its practical photoelectric conversion efficiency amounts to only about 7-10%. Local damage is likely to be caused due to local overheated spots. Especially, in the case that solar photovoltaic cells and the building are integratedly designed and therefore a building envelope has to be designed to facilitate heat dissipation, an acerb contradiction arises between cooling of the backplate of the photovoltaic cell and heat insulation of the building envelope. In the prior art, neither is the waste heat from the photovoltaic cell made full use of, nor is an efficient cooling method developed. Therefore, the heat from the cell backplates is directly discharged into the interior of the building, or the temperature of the cell backplates at the presence of insulating structure becomes much higher than in the case of being deployed in field (e.g., the local temperature may exceed 100°*C*, which severely deteriorates the cell endurance). Therefore, integral design of the solar photovoltaic power generation system with building cannot be put into practice use nowadays.

In addition, reflectors or lens of low cost are employed in concentrating photovoltaic power generation technology (CPV) to decrease the number of expensive solar cells. In this case, the photovoltaic cell works under light irradiation of low and even high multiple intensity, thus its effective output power of per unit area is increased significantly and the cost of the power generation is reduced greatly. However, with increase of the radiation light intensity per unit area, heat that is absorbed is increased. The local temperature of the chip is increased due to high focusing, which affects the photovoltaic efficiency severely and limits the increase of the focusing multiple, and hence becomes the core technical challenge in field of high focusing photovoltaic.

The important topic that will advance the explosive development of the solar photovoltaic industry is how to realize efficient cooling of the solar photovoltaic cell, and how to fully utilize the waste heat of the cell in an economic way.

In Chinese patent application No. 200810239002.0 titled *A Heat Sink of Photovoltaic Cell*, filed by the applicant, an efficient heat sink for photovoltaic cells is disclosed. In this heat sink, the heat absorption surface of the cooling plate of the micro heat pipe formed by micro tube or micro groove therein contacts with the backplate of the photovoltaic cell, and a part or all of the rest sides is the cooling surface. The heat sink can efficiently and quickly absorb the heat accumulated in the photovoltaic cell, decrease the temperature of the photovoltaic cell, and hence fulfill the goal of efficient cooling. However, the heat sink conducts cooling through the surface that does not contact with the photovoltaic cell, or part of the surface is located in a heat exchanger. In the case that the heat sink is used in a building, it is necessary to make the surface of backing of the heat absorption surface of the cooling plate contact with the building, or to locate it within the building, so the backing can not function as the cooling surface. Thus the cooling plate has to be longer or wider than the photovoltaic cell plate, which costs much more material and prevents the dissipated heat from being additionally utilized. Moreover, in the heat sink the heat tube is located in the water tank heat exchanger, which affects the life of the heat tube unfavourably and causes a sealing leakage problem between the plate heat tube and the heat exchanger. At the same time, as the overheating phenomenon at individual spots occurs usually in the application of the photovoltaic cell plate and the cooling plate is usually assembled by a plurality of blocks, unsuitable assembly will render a problem that the heat generated by the spots cannot be radiated in time. In this case, local overheating is caused, and thus power generation efficiency and life of the photovoltaic cell will be adversely affected. CN 2013 68606 Y relates to a flat-plate solar energy photovoltaic electricity-heat conversion device.

### Summary

The invention aims to solve the problems in the prior art, that is, low efficiency and short life of photovoltaic cells due to overheating at the whole cells or some spots thereof that may be caused by insufficient dissipation of photovoltaic cells, and provides an efficient heat sink for solar photovoltaic cells, which can dissipate heat from solar photovoltaic cells quickly and effectively when employed to engage with the building surface and when employed as a building component. Therefore, heat dissipation of the cell plates is balanced and overheating at individual spots is avoided. In this way, solar utilization efficiency is improved, life of solar cells is prolonged, and the cost of the solar photovoltaic industry is decreased. The invention also relates to an efficient solar photovoltaic cell which employs the device, a combined heat and power generation system and the components special for the device.

An efficient heat sink for solar photovoltaic cells according to the invention is defined in claim 1.

The length of the flat plate heat pipe is close to, but not larger than, that of the cell plate, and there are two or more heat pipes within the flat plate heat pipe, and the phrase directly engaging, or its variation, means that two or more flat plate heat pipes are arranged closely side by side, with the distance therebetween less than 5mm, and the front plate surfaces thereof are tightly engaged directly with the backplate of the cell plate; the phrase, indirectly engaging, and its variation, means that a metal plate with good conductivity for the whole plate or a plurality of metal plates engaged with each other closely with good conductivity in a whole, are arranged between the backplate of the cell plate and the front plate surface of the one or more flat plate heat pipes.

The width of the engaging surface is between 20mm and 300mm, and the inner diameter of through-pipe is between 5mm and 60mm.

The phrase, engaging, or its variation, refers to engagement of dry type, without welding, or engagement by means of adhesive.

The heat exchanger of plate pipe type is a unilateral heat exchanger designed with an engaging surface only on one side of the through-pipe, and the wall thickness of the through-pipe on the side opposite to the engaging surface is between 1.0mm and 6mm; alternatively, the heat exchanger is a bilateral heat exchanger designed with an engaging surfaces separately on both sides relative to the through-pipe.

The flat plate heat pipe is a micro heat pipe array of flat plate type formed by extruding or stamping for metal or alloy, and the backplate surface of the flat plate heat pipes and the surface of the heat exchanger except the engaging portion are coated with coating of high radiation rate; the engaging surface of the heat exchanger strides across each micro heat pipe.

An efficient solar photovoltaic cell plate employing the heat sink, comprising a cell plate, is characterized in that, it further comprises one or more flat plate heat pipes matching with the cell plate in size; wherein a front plate surface of the front and back plate surfaces of which directly engages or indirectly engages with the backplate of the cell plate, and covers the whole backplate of the cell plate; and further comprises a heat exchanger of plate pipe type that engages with the cooling portion of backplate surface of the flat plate heat pipe; the flat plate heat pipe includes therein one or more heat pipes arranged side by side; the heat exchanger is a through-pipe with an engaging surface on one side thereof; the engaging surface extends along the longitudinal direction of the through-pipe; the through-pipe strides across the heat pipes of the flat plate heat pipe; and the through-pipe has a connecting head and / or a connecting port to be connected with other pipelines.

The length of the flat plate heat pipe is close to, but not larger than, that of the cell plate, and there are two or more heat pipes within the flat plate heat pipe, and the phrase directly engaging, or its variation, means that two or more flat plate heat pipes are arranged closely side by side, with the distance therebetween less than 5mm, and the front plate surfaces thereof are tightly engaged directly with the backplate of the cell plate; the phrase, indirectly engaging, and its variation, means that a metal plate with good conductivity for the whole plate or a plurality of metal plates engaged with each other closely with good conductivity in a whole, are arranged between the backplate of the cell plate and the front plate surface of the one or more flat plate heat pipes.

The width of the engaging surface is between 20mm and 300mm, and the inner diameter of through-pipe is between 5mm and 60mm.

The phrase, engaging, or its variation, refers to engagement of dry type, without welding, or engagement by means of adhesive.

The heat exchanger of plate pipe type is a unilateral heat exchanger designed with an engaging surface only on one side of the through-pipe, and the wall thickness of the through-pipe on the side opposite to the engaging surface is between 1.0mm and 6mm; alternatively, the heat exchanger is a bilateral heat exchanger designed with an engaging surfaces separately on both sides relative to the through-pipe.

The flat plate heat pipe is a micro heat pipe array of flat plate type formed by extruding or stamping for metal or alloy, and the engaging surface of the heat exchanger strides across each micro heat pipe.

The cell plate and the flat plate heat pipes which are matching with each other in size are assembled as a whole through a frame, and ratio of the width of the engaging surface of the heat exchanger in the frame to the length of the flat plate heat pipe is from 1/20 to 1/5, preferably from 1/10 to 1/5.

The efficiency solar photovoltaic cells plates are arranged closely side by side.

A combined heat and power generation system employing the efficient solar photovoltaic cell plate, comprising a cell, is characterized in that, it further comprises one or more flat plate heat pipes matching with the cell plate in size, wherein a front plate surface of the front and back plate surfaces of which directly engages or indirectly engages with the backplate of the cell plate, and covers the whole backplate of the cell plate; and further comprises a heat exchanger of plate pipe type that engages with the cooling portion of backplate surface of the flat plate heat pipe; the flat plate heat pipe includes therein one or more heat pipes arranged side by side; the heat exchanger is a through-pipe with an engaging surface on one side thereof; the engaging surface extends along the longitudinal direction of the through-pipe; the through-pipe strides across the heat pipes of the flat plate heat pipe; and the through-pipe is connected to a pump, an air cooling heat exchanger for overheating protection, and a water tank through a pipeline to form a circular loop.

The length of the flat plate heat pipe is close to, but not larger than, that of the cell plate, and there are two or more heat pipes within the flat plate heat pipe, and the phrase directly engaging, or its variation, means that two or more flat plate heat pipes are arranged closely side by side, with the distance therebetween less than 5mm, and the front plate surfaces thereof are tightly engaged directly with the backplate of the cell plate; the phrase, indirectly engaging, and its variation, means that a metal plate with good conductivity for the whole plate or a plurality of metal plates engaged with each other closely with good conductivity in a whole, are arranged between the backplate of the cell plate and the front plate surface of the one or more flat plate heat pipes.

The width of the engaging surface is between 20mm and 300mm, and the inner diameter of through-pipe is between 5mm and 60mm, and the wall thickness of the through-pipe on the side opposite to the engaging surface is between 1.0mm and 6mm.

The phrase, engaging, or its variation, refers to engagement of dry type, without welding, or engagement by means of adhesive; the heat exchanger of plate pipe type is a unilateral heat exchanger designed with an engaging surface only on one side of the through-pipe, and the wall thickness of the through-pipe on the side opposite to the engaging surface is between 1.0mm and 6mm; alternatively, the heat exchanger is a bilateral heat exchanger designed with an engaging surfaces separately on both sides relative to the through-pipe,

The flat plate heat pipe is a micro heat pipe array of flat plate type formed by extruding or stamping for metal or alloy, and the engaging surface of the heat exchanger strides across each micro heat pipe.

The cell plate and the flat plate heat pipes which are matching with each other in size are assembled as a whole through a frame, and ratio of the width of the engaging surface of the heat exchanger in the frame to the length of the flat plate heat pipe is from 1/20 to 1/5, preferably from 1/10 to 1/5.

The close connection between the efficiency solar photovoltaic cells plates is realized through a bilateral plate pipe.

The combined heat and power generation system maintains the temperature of the silicon photovoltaic cell within 50°C and generates hot water within 45°C; alternatively the temperature of the amorphous photovoltaic cell is maintained within 90°C and hot water within 80°C is generated.

A heat exchanger of plate pipe type not according to the invention is a through-pipe with an engaging surface on one side thereof; the engaging surface extends along the longitudinal direction of the through-pipe; and the through-pipe has a connecting head and / or connecting port to be connected with other pipelines.

The through-pipe is designed with an engaging surface on only one side thereof, alternatively the through-pipe is designed with an engaging surface and a connecting surface on opposite sides.

The engaging surface and / or the connecting surface, together with the through-pipe, are a holistic structure; alternatively, they are a separate structure that can be assembled as a whole, that is, the engaging surface is a surface of a plate structure whose length is less than or equal to that of the through-pipe, and the surface of the plate structure that is opposite to the engaging surface is designed with an arc structure that matches with the through-pipe, and this separate structure also applies to the case in which the connecting surface and the through-pipe are separate.

The engaging surface and / or the connecting surface connects with the outer surface of the through-pipe through a concave surface.

Technical effects of the invention are as follows.

The invention provides an efficient heat sink for solar photovoltaic cells, an efficient solar photovoltaic cell plate employing the heat sink and a combined heat and power generation system employing the efficient solar photovoltaic cell plate. Since the front plate surface of the plate heat tube directly or indirectly engages with the backplate of the cell plate, and the heat exchanger of plate pipe type with a special structure engages with the cooling portion of backplate surface of the flat plate heat pipe, heat absorbed quickly by the heat absorption surface of the flat plate heat pipe (the front plate surface) from the cell plate can be dissipated quickly by the heat exchanger of plate pipe type from through-pipe through cooling media, such as water or antifreeze, without affecting combination of the cell plate with a building surface or application of the cell plate as a building component. Therefore, the temperature of the cell plate is prevented from rising, and the dissipated heat may be utilized effectively to generate hot water, solar utilization efficiency is improved, and the cost of the solar photovoltaic industry is reduced. Besides, since the need is dispensed with that a building envelope has to be provided for cooling in the case of integral design for the solar photovoltaic cell and the building, the contradiction between cooling of the cell backplate and heat insulation of the building envelope is resolved.

### Brief Description of the Drawings

Figure 1 is the schematic exploded structure view of the efficient heat sink for solar photovoltaic cells according to the invention.
Figure 2 is the schematic structure view showing the cross section of the unilateral heat exchanger of plate pipe type according to the invention.
Figure 3 is the schematic structure view showing the cross section of the bilateral heat exchanger of plate pipe type according to the invention.
Figure 4 is the schematic structure view of the natural convection heating of three efficiency solar photovoltaic cells plates according to the invention, which are not arranged closely.
Figure 5 is the schematic structure view of the forced convection heating of three efficiency solar photovoltaic cells plates according to the invention, which are not arranged closely.
Figures 6a and 6b are the schematic structure back view and side view of the efficient solar photovoltaic cell plate designed with a peripheral frame, respectively, and Figure 6c is the cross section of the unilateral heat exchanger of plate pipe type thereof.
Figure 7a and 7b are the schematic structure back view and side view of the high efficient solar photovoltaic cell plate designed with a peripheral frame, respectively, and Figure 7c is the cross section of the bilateral plate pipe heat exchanger of plate pipe type thereof.
Figure 8 depicts the coarse assembly of a plurality of efficient solar photovoltaic cells plates according to the invention.
Figure 9 depicts the compact assembly of a plurality of efficient solar photovoltaic cells plates according to the invention.
Figure 10 is the schematic structure view showing the application of the combined heat and power generation system according to the invention as a heat recovery type solar photovoltaic power station system.
Figure 11 is the schematic structure view showing the application of the combined heat and power generation system according to the invention as a heat rejection type solar photovoltaic power station system.

### Detailed Description of the Preferred Embodiments

Hereinafter the invention will be further explained with reference to the accompanying figures.

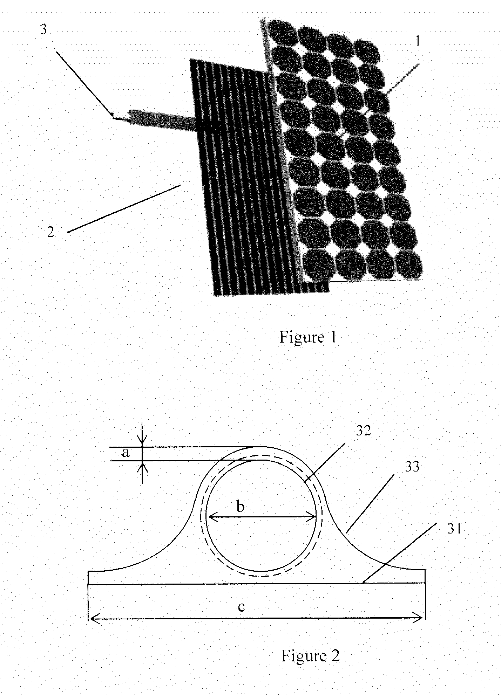

Figure 1 is the schematic exploded structure view of the high efficient heat sink for solar photovoltaic cells according to the invention. The efficient heat sink for solar photovoltaic cells shown in Fig. 1, which can be utilized to cool solar photovoltaic cell plate 1, comprises of one or more flat plate heat pipes 2. Preferably, the length of flat plate heat pipes 2 is similar to, but not larger than that of the cell plate, thus materials can be saved and the cell plates can be assembled conveniently. Fig. 1 shows a plurality of flat plate heat pipes 2 in a side by side arrangement, in which the front plate surface of the front and back plate surfaces of the flat plate heat pipes 2 directly engages or indirectly engages with the backplate of the cell plate 1. In this embodiment, the plurality of flat plate heat pipes 2 arranged side by side match the cell plate 1 in size, and the front plate surfaces thereof cover the whole backplate of the cell plate 1. Each flat plate heat pipe 2 has therein one or more heat pipes that are arranged side by side. Preferably, the flat plate heat pipe 2 has therein two or more heat pipes. More preferably, the flat plate heat pipe 2 is a micro heat pipe array of flat plate type formed by extruding or stamping for metal or alloy, in this way the flat plate heat pipe 2 has high heat-exchange efficiency and sufficient resistance against compression.

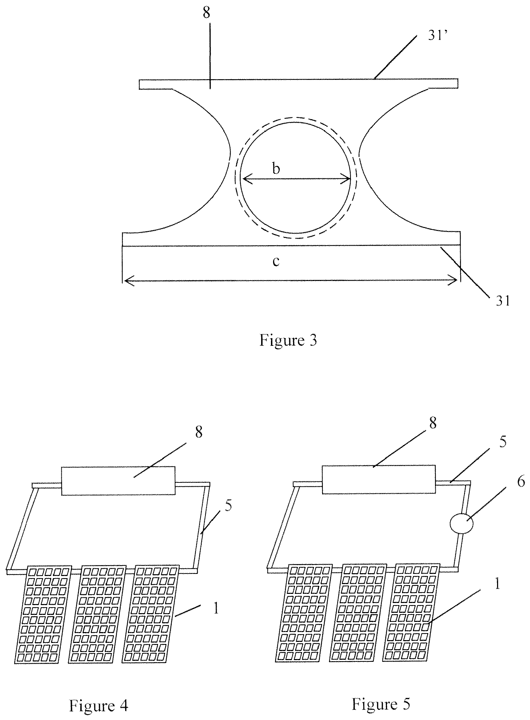

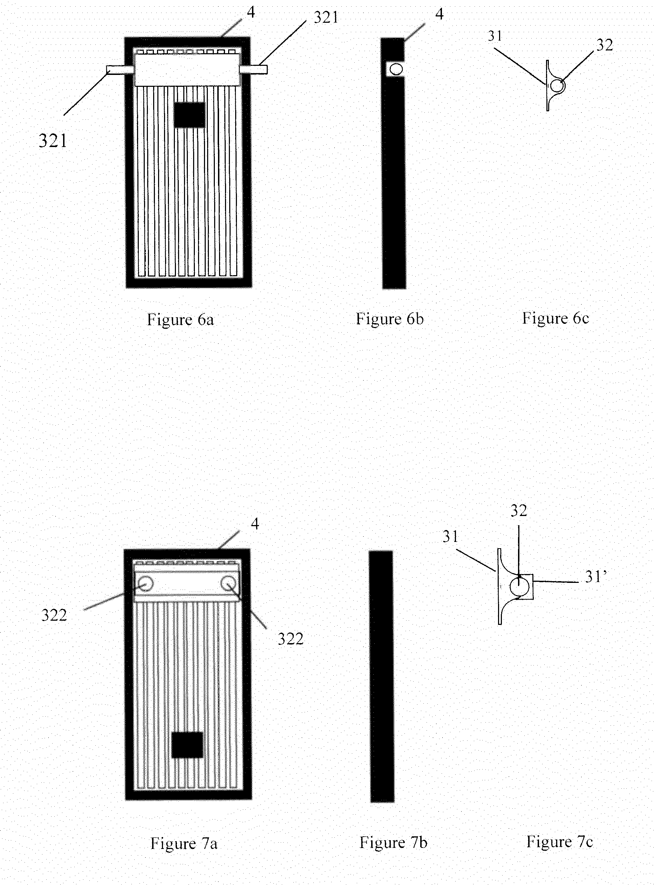

The efficient heat sink for solar photovoltaic cells also comprises a heat exchanger 3 of plate pipe type that engages with the cooling portion of backplate surface of the flat plate heat pipe 2. The structure of the heat exchanger 3 of plate pipe type is shown in Fig. 2 and 3. As shown, the heat exchanger 3 is a through-pipe 32 with an engaging surface 31 for engaging on one side thereof, which extends along the longitudinal direction of the through-pipe 32. The through-pipe 32 strides across the flat plate heat pipe 2 and micro heat pipes therein in such a way that each heat pipe may exchange heat with the heat exchanger 3. Preferably the longitudinal direction of the through-pipe 32 is perpendicular or substantially perpendicular to the longitudinal direction of the heat pipes within the flat plate heat pipe 2, thus the engaging surface 31 of the heat exchanger 3 strides across micro heat pipes. The through-pipe 32 has a connecting head 321 and / or connecting port 322 (shown in figure 6a and 7a) to be connected with other pipelines.

The phrase directly engaging, or its variation, means that two or more flat plate heat pipes 2 are arranged closely side by side, with the distance therebetween less than 5mm, and the front plate surfaces thereof are tightly engaged directly with the backplate of the cell plate 1. The phrase, indirectly engaging, and its variation, means that a metal plate with good conductivity for the whole plate, such as an aluminum plate is arranged between the backplate of the cell plate 1 and the front plate surface of the flat plate heat pipe 2. The metal plate may be an integral plate, or may be formed by two or more metal plates that are arranged closely. In the case that a metal plate of good conductivity and high uniformity is sandwiched between the backplate of cell plate 1 and the flat plate heat pipe 2, the flat plate heat pipe 2 that are arranged side by side may not be close. There may be a clearance therebetween, or, the distance between the flat plate heat pipes 2 arranged side by side may be greater than 5mm. Thus, it is ensured that heat can be uniformly dissipated quickly even in the case that intensive heat is generated at individual spots through a close side-by-side arrangement of the flat plate heat pipes 2 or a sandwiching arrangement of a metal plate of good and uniform conductivity between the backplate of the cell plate 1 and the flat plate heat pipes 2, in this way, the problems of low efficiency of the cell and decreased endurance that would otherwise result from the increased temperature due to these spots are avoid.

The width c of the engaging surface 31 is between 20mm and 300mm, and the inner diameter b of through-pipe 32 is between 5mm and 60mm.

The phrase, engaging, or its variation, refers to engagement of dry type, without welding, or engagement by means of adhesive. The adhesive may be silica or other heat conductive glue. Preferably the adhesive has good heat conductivity and a lifespan up to 20-30 years.

According to another embodiment, the heat exchanger 3 may be a unilateral heat exchanger designed with an engaging surface 31 only on one side of through-pipe 32, as shown in Fig. 2. In this case, the wall thickness of the through-pipe 32 on the side opposite to the engaging surface 31 is between 1.0mm and 6mm. Alternatively, the heat exchanger 3 is a bilateral heat exchanger designed with an engaging surface 31 and a connecting surface 31' on both sides relative to the through-pipe 32, as shown in Fig. 3. The engaging surface 31 and / or the connecting surface 31', together with the through-pipe 32, may be of, but not necessarily, a holistic structure, such as shown in Figs. 2 and 3. They may be of a separate structure. The engaging surface 31 and / or the connecting surface 31' is a surface of a plate structure whose length is less than or equal to that of the through-pipe 32. The surface of the plate structure that is opposite to the engaging surface 31 is designed with an arc structure that matches with the through-pipe 32. This separate structure also applies to the case in which the connecting surface 31' and the through-pipe 32 are separate. The engaging surface 31 and the connecting surface 31' may be symmetrical or asymmetrical. Preferably they are symmetrical, and the area of connecting surface 31' is preferably less than that of the engaging surface 31.

The engaging surface 31 and / or the connecting surface 31' connects with the surface of the through-pipe 32 through a concave surface 33, thus material is saved and heat conduction is ensured.

Furthermore, it is preferable that the backplate surface of the flat plate heat pipes 2 arranged side by side and the surface of the heat exchanger 3 except the engaging portion are coated with coating of high radiation rate, such as ceramic coating. When the temperature of cell plate 1 is increased (to above 50°C, hypothetically), the front plate surface of the flat plate heat pipe 2 absorbs heat of the cell plate 1 as a heat absorption surface, and most of the heat of the cell plate 1 is quickly transported by the heat exchanger 3 of plate pipe type contacted on the backplate surface of the flat plate heat pipe 2. At the same time, another part of the heat of the flat plate heat pipe 2 can be dissipated by the coating of high radiation rate. Thus the heat conduction efficiency of the flat plate heat pipe 2 can be improved by the coat of high radiation rate. Further, even in the case in which the flat plate heat pipe 2 is damaged and thus cannot generate heat tube effect, the heat of the cell plate 1 can be dissipated through the coating of high heat radiation rate coated on the flat plate heat pipe 2. In this sense, the coating of high radiation rate provides double protections.

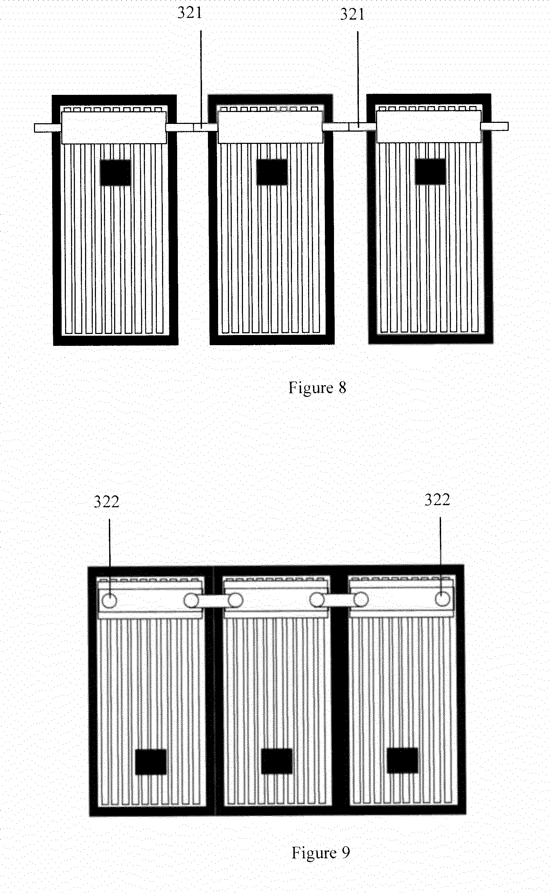

An efficient solar photovoltaic cell plate employing the heat sink shown in Fig. 1 and its applications are shown in Figs. 4-11. The cell plate comprises a cell plate 1 and an efficient heat sink for solar photovoltaic cells engaged closely with the backplate of the cell plate. The flat plate heat pipes 2 arranged side by side should match with the backplate of the cell plate 1 in size. Preferably, they are fixed in a rectangle frame (such the frame 4 as shown in Figs. 6a and 7a) after being closely engaged with each other (this also applies to the situation in which a uniform aluminum plate is sandwiched therebetween). The connecting head 321 connecting the through-pipe 32 and other pipelines can go through two sides of the frame 4, as shown in figures 6a and 6b. Thus by means of the connecting head, it is not necessary for the efficient solar photovoltaic cells to be arranged closely, as shown in figure 8. This kind of the heat exchanger 3 of plate pipe type can be embodied as the unilateral heat exchanger as shown in figure 2, with the connection state shown in figure 6c. The through-pipe 32 is connected to other pipelines through the connecting head or the connecting port 322, which, different from the connecting head 321, projects from the portion of the heat exchanger 3 of plate pipe type that is located within the frame 4, as shown in figures 7a and 7b. This kind of the heat exchanger 3 of plate pipe type is preferably embodied as the bilateral heat exchanger shown in figure 3 so as to arrange connecting pipelines on the connecting surface 31' corresponding to the engaging surface 31. In this case, the connecting head or the connecting port 322 does not pass through two sides of the frame 4, but still can connect a plurality of efficient solar photovoltaic cells plates. The efficiency solar photovoltaic cells may be arranged closely, or be design with waterproof connection, as shown in figure 9. The setting mode of the bilateral heat exchanger 3 is shown in figure 7c, wherein the width of the connecting surface 31' used for the connection is preferably less than that of the engaging surface 31 so as to save material.

The cell plate 1 and the flat plate heat pipe 2 can be assembled as a whole through the frame 4, and ratio of the width of the engaging surface 31 of the heat exchanger 3 of plate pipe type in the frame 4 to the length of the flat plate heat pipe is from 1/20 to 1/5, preferably from 1/10 to 1/5. Through employing the width within this range, a high efficient heat exchanging can be assured, and material is saved, thus the weight of the heat exchanger of plate pipe type is decreased. It is obvious that a plurality of heat exchangers 3 of plate pipe type may be arranged transversely on the backplate surface of the flat plate heat pipe 2. In this case, the connecting heads or the connecting ports thereof can be connected to external pipelines after being connected in parallel. In this case, the sum of the widths of the engaging surfaces 31 of the heat exchangers 3 of plate pipe type preferably ranges from 1/20 to 1/5 of the length of the flat plate heat pipe, preferably from 1/10 to 1/5. The sum of the width c of the engaging surfaces 31 ranges from 20mm to 300mm, and the sum of the inner diameter b of through-pipes ranges from 5mm to 60mm.

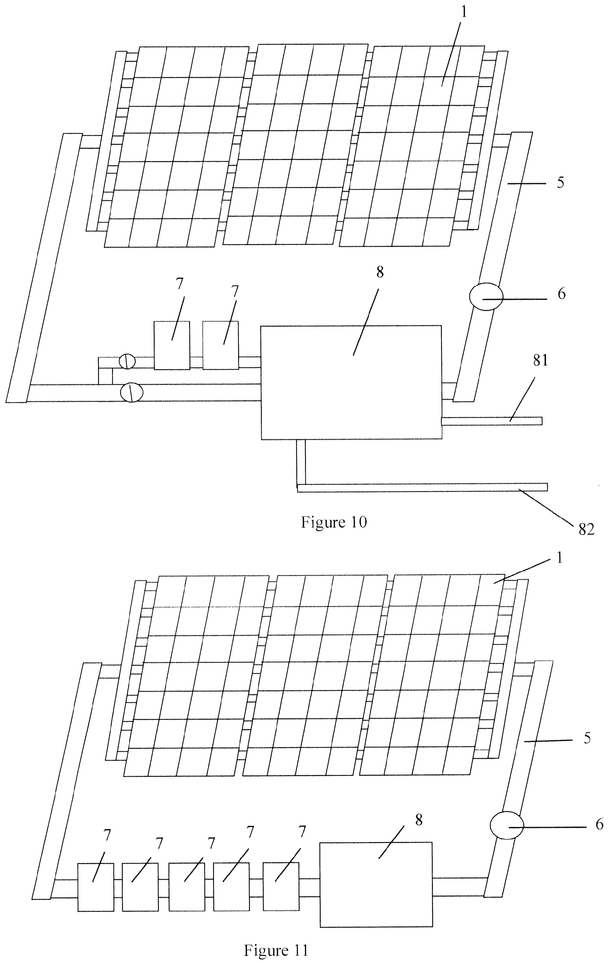

A combined heat and power generation system employing the efficient solar photovoltaic cell plate comprises an efficient solar photovoltaic cell plate 1, wherein the through-pipe 32 is connected to a pump 6 and a water tank 8 through a pipeline 5 to form a circular loop, so as to provide heat, as shown in figure 5 which is the schematic structure view of the forced convection heating of three efficiency solar photovoltaic cells plates according to the invention that are not arranged closely. A natural convection heating would be formed when the pump 6 is dispensed with, as shown in figure 4 which is the schematic structure view of the natural convection heating of three efficiency solar photovoltaic cells plates according to the invention that are not arranged closely. Fig. 10 depicts a combined heat and power generation system of heat recovery type, wherein the water tank 8 has a large volume, the pipeline 5 may be provided with a plurality of, or a few of air cooling heat exchangers 7 for overheating protection, or not provided at all. The water tank 8 is provided with an inlet pipe 81 and an outlet pipe 82. The cool water is input from the inlet pipe. The cool water is heated by the heat conducted from the working medium in the pipeline 5. The heated water is output from the outlet pipe 82 so to as to provide heat. Fig. 11 depicts a solar photovoltaic cell plate of heat rejection type which is used only for power generation. In this case, the water tank 8 has a small volume, the pipeline 5 should be designed with a few of, or a plurality of air cooling heat exchanger 7 for overheating protection to dissipate heat. The temperature of the efficient solar photovoltaic cell can be monitored. One or more air cooling heat exchangers 7 can be turned on once the temperature exceeds the set value and hence the water tank 8 dose not dissipate well. Thus, the power generation efficiency of the efficiency solar photovoltaic cells plates according to the invention is improved considerably, and the life thereof is increased greatly. The combined heat and power generation system shown in figure 10 maintains the temperature of the silicon photovoltaic cell within 50°C and generates hot water within 45°C. Alternatively the temperature of the amorphous photovoltaic cell is maintained within 90°C and hot water within 80°C is generated.

Therefore, the solar photovoltaic combined heat and power generation system according to the invention can be designed effectively for building. For building attached photovoltaic (BAPV), the efficient solar photovoltaic cell plate can be attached on the building roof or on the wall surface, and the relative power generation efficiency can be increased by 15% to 30%. Hot water at about 40°C to 45°C can be provided for building heating or human using, and so on. The solar utilization efficiency of the system amounts to 50--60%.

For building integrated photovoltaic (BIPV), the solar photovoltaic cell plate according to the invention can be used as a building component; the relative power generation efficiency can be increased by 15% to 30%; Hot water at about 40°C to 45°C can be provided for building heating or human using, and so on. The solar utilization efficiency of the system amounts to 50--60%.

For the solar photovoltaic combined heat and power generation system of heat recovery type, centralized heating can be fulfilled through utilizing waste heat while cooling the cell plate, and the relative power generation efficiency can be increased by 15% to 30%. Hot water at about 40°C to 45°C can be provided for centralized heating or other applications.

The efficient solar photovoltaic cell plate can be applied to the solar photovoltaic power station of heat rejection type. The solar photovoltaic power station can be built in desert or non-residential areas, wherein waste heat cannot be utilized and cooling the cell plate is the only purpose of heat dissipation. The air cooling heat exchanger 7 must be provided. The relative power generation efficiency can be increased by 15% to 30% due to employing the efficient solar photovoltaic cell plate. When the water temperature is higher than the outside temperature, the waste heat is discharged by the cooling circulation system through efficient natural air cooling heat exchanger.

## Claims

1. An efficient heat sink for solar photovoltaic cells, used for dissipating heat therefrom, **characterized in that**, it comprises one or more flat plate heat pipes (2), wherein a front plate surface of the front and back plate surfaces of which directly engages or indirectly engages with the backplate of the cell plate (1), and covers the whole backplate of the cell plate; and further comprises a heat exchanger (3) of plate pipe type that engages with the cooling portion of backplate surface of the flat plate heat pipe; the flat plate heat pipe is a micro heat pipe array of flat plate type that includes therein more heat pipes arranged side by side; the heat exchanger (3) is a through-pipe (32) with an engaging surface (31) on one side thereof; the engaging surface (31) extends along the longitudinal direction of the through-pipe (32); the through-pipe (32) strides across the heat pipes of the flat plate heat pipe; and the through-pipe (32) has a connecting head (321) and / or connecting port (322) to be connected with other pipelines.

2. The efficient heat sink for solar photovoltaic cells according to claim 1, **characterized in that**, the length of the flat plate heat pipe (2) is close to, but not larger than, that of the cell plate (1), and there are two or more heat pipes within the flat plate heat pipe, and the phrase directly engaging means that two or more flat plate heat pipes (2) are arranged closely side by side, with the distance therebetween less than 5mm, and the front plate surfaces thereof are tightly engaged directly with the backplate of the cell plate (1); the phrase indirectly engaging means that a metal plate with good conductivity for the whole plate or a plurality of metal plates engaged with each other closely with good conductivity in a whole, are arranged between the backplate of the cell plate (1) and the front plate surface of the one or more flat plate heat pipes (2).

3. The efficient heat sink for solar photovoltaic cells according to claim 1 or 2, **characterized in that**, the phrase engaging refers to engagement of dry type, without welding, or engagement by means of adhesive; the width of the engaging surface (31) is between 20mm and 300mm, and the inner diameter of through-pipe is between 5mm and 60mm.

4. The efficient heat sink for solar photovoltaic cells according to claim 1 or 2, **characterized in that**, the heat exchanger (3) of plate pipe type is a unilateral heat exchanger designed with an engaging surface (31) only on one side of the through-pipe (32), and the wall thickness of the through-pipe (32) on the side opposite to the engaging surface (31) is between 1.0mm and 6mm; alternatively, the heat exchanger (3) is a bilateral heat exchanger designed with an engaging surfaces separately on both sides relative to the through-pipe (32).

5. The efficient heat sink for solar photovoltaic cells according to claim 1 or 2, **characterized in that**, the flat plate heat pipe (2) is a micro heat pipe array of flat plate type formed by extruding or stamping for metal or alloy, and the backplate surface of the flat plate heat pipes and the surface of the heat exchanger (3) except the engaging portion are coated with coating of high radiation rate; the engaging surface (31) of the heat exchanger (3) strides across each micro heat pipe.

6. An efficient solar photovoltaic cell plate, **characterized in that**, it comprises a cell plate, and the cell plate engages with the flat plate heat pipe of the efficient heat sink for solar photovoltaic cells according to any of claim 1 to 5.

7. The efficient solar photovoltaic cell plate according to claim 6, **characterized in that**, the cell plate and the flat plate heat pipes (2) which are matching with each other in size are assembled as a whole through a frame, and ratio of the width of the engaging surface (31) of the heat exchanger (3) in the frame to the length of the flat plate heat pipes (2) is from 1/20 to 1/5.

8. The efficient solar photovoltaic cell plate according to claim 7, **characterized in that**, ratio of the width of the engaging surface (31) of the heat exchanger (3) in the frame to the length of the flat plate heat pipes (2) is from 1/10 to 1/5.

9. The efficient solar photovoltaic cell plate according to claim 6 or 7, **characterized in that**, the efficiency solar photovoltaic cells plates are arranged closely side by side.

10. A combined heat and power generation system, **characterized in that**, it employs the efficient solar photovoltaic cell plate according to claim 6 to 9, and the through-pipe (32) is connected to a pump (6) and a water tank (8) through a pipeline (5) to form a circular loop.

11. The combined heat and power generation system according to claim 10, **characterized in that**, the pipeline is designed with an air cooling heat exchanger (7) for overheating protection.

12. The combined heat and power generation system according to claim 10 or 11, **characterized in that**, the combined heat and power generation system maintains the temperature of the silicon photovoltaic cell within 50°C and generates hot water within 45°C; alternatively the temperature of the amorphous photovoltaic cell is maintained within 90°C and hot water within 80°C is generated.

## Patentansprüche

1. Effiziente Wärmesenke für photovoltaische Solarzellen, die zur Ableitung von Wärme von diesen eingesetzt wird, **dadurch gekennzeichnet, dass** sie ein oder mehrere Flachplatten-Wärmerohr/e (2) umfasst, wobei von der vorderen und der hinteren Plattenfläche eine vordere Plattenfläche derselben direkt oder indirekt mit der Trägerplatte der Zellenplatte (1) in Eingriff ist und die gesamte Trägerplatte der Zellenplatte abdeckt, und des Weiteren einen Wärmetauscher (3) vom Plattenrohr-Typ umfasst, der mit dem Kühlabschnitt der hinteren Plattenfläche des Flachplatten-Wärmerohrs in Eingriff ist, das Flachplatten-Wärmerohr eine Mikro-Wärmerohranordnung vom Flachplatten-Typ ist, in der mehr nebeneinander angeordnete Wärmerohre enthalten sind, der Wärmetauscher (3) ein Durchgangsrohr (32) mit einer Eingriffsfläche (31) an einer Seite desselben ist, die Eingriffsfläche (31) sich in der Längsrichtung des Durchgangsrohrs (32) erstreckt, das Durchgangsrohr (32) die Wärmerohre des Flachplatten-Wärmerohrs überspannt und das Durchgangsrohr (32) einen Verbindungs-Kopf (321) und/oder einen Verbindungs-Anschluss (322) zum Verbinden mit anderen Rohrleitungen aufweist.

2. Effiziente Wärmesenke für photovoltaische Solarzellen nach Anspruch 1, **dadurch gekennzeichnet, dass** die Länge des Flachplatten-Wärmerohrs (2) nahe an der der Zellenplatte (1) liegt, aber nicht größer ist als diese, dass sich zwei oder mehr Wärmerohre innerhalb des Flachplatten-Wärmerohrs befinden, und direkter Eingriff bedeutet, dass zwei oder mehr Flachplatten-Wärmerohre (2) eng nebeneinander angeordnet sind und der Abstand zwischen ihnen weniger als 5 mm beträgt, und die vorderen Plattenflächen derselben enganliegend direkt mit der Trägerplatte der Zellenplatte (1) in Eingriff sind, indirekter Eingriff bedeutet, dass eine Metallplatte mit guter Leitfähigkeit für die gesamte Platte oder eine Vielzahl von Metallplatten, die mit guter Leitfähigkeit als Ganzes eng in Eingriff miteinander sind, zwischen der Trägerplatte der Zellenplatte (1) und der vorderen Plattenfläche des einen oder der mehreren Flachplatten-Wärmerohrs/-rohre (2) angeordnet ist/sind.

3. Effiziente Wärmesenke für photovoltaische Solarzellen nach Anspruch 1 oder 2, **dadurch gekennzeichnet, dass** Eingriff trockener Eingriff, mit Ausnahme von Schweißen, oder Eingriff mittels Klebstoff ist, die Breite der Eingriffsfläche (31) zwischen 20 mm und 300 mm beträgt und der Innendurchmesser des Durchgangsrohrs zwischen 5 mm und 60 mm beträgt.

4. Effiziente Wärmesenke für photovoltaische Solarzellen nach Anspruch 1 oder 2, **dadurch gekennzeichnet, dass** der Wärmetauscher (3) vom Plattenrohr-Typ ein einseitiger Wärmetauscher ist, der mit einer Eingriffsfläche (31) an nur einer Seite des Durchgangsrohrs (32) versehen ist, und die Wanddicke des Durchgangsrohrs (32) an der der Eingriffsfläche (31) gegenüberliegenden Seite zwischen 1,0 mm und 6 mm beträgt, wobei als Alternative dazu der Wärmetauscher (3) ein beidseitiger Wärmetauscher ist, der mit Eingriffsflächen separat an beiden Seiten relativ zum Durchgangsrohr (32) versehen ist.

5. Effiziente Wärmesenke für photovoltaische Solarzellen nach Anspruch 1 oder 2, **dadurch gekennzeichnet, dass** das Flachplatten-Wärmerohr (2) eine Mikro-Wärmerohranordnung vom Flachplatten-Typ ist, die durch Extrudieren oder Stanzen von Metall oder Legierung ausgebildet wird, und die Trägerplatten-Fläche der Flachplatten-Wärmerohre und die Oberfläche des Wärmetauschers (3) mit Ausnahme des Eingriffsabschnitts mit einer Beschichtung mit hohem Abstrahlvermögen beschichtet sind und die Eingriffsfläche (31) des Wärmetauschers (3) jedes Mikro-Wärmerohr überspannt.

6. Effiziente photovoltaische Solarzellen-Platte, **dadurch gekennzeichnet, dass** sie eine Zellenplatte umfasst und die Zellenplatte mit dem Flachplatten-Wärmerohr der effizienten Wärmesenke für photovoltaische Solarzellen nach einem der Ansprüche 1 bis 5 in Eingriff ist.

7. Effiziente photovoltaische Solarzellen-Platte nach Anspruch 6, **dadurch gekennzeichnet, dass** die Zellenplatte und die Flachplatten-Wärmerohre (2), die einander hinsichtlich der Größe entsprechen, als Ganzes über einen Rahmen zusammengesetzt sind, und das Verhältnis der Breite der Eingriffsfläche (31) des Wärmetauschers (3) in dem Rahmen zu der Länge der Flachplatten-Wärmerohre (2) von 1/20 bis 1/5 beträgt.

8. Effiziente photovoltaische Solarzellen-Platte nach Anspruch 7, **dadurch gekennzeichnet, dass** das Verhältnis der Breite der Eingriffsfläche (31) des Wärmetauschers (3) in dem Rahmen zu der Länge der flachen Plattenwärmerohre (2) von 1/10 bis 1/5 beträgt.

9. Effiziente photovoltaische Solarzellen-Platte nach Anspruch 6 oder 7, **dadurch gekennzeichnet, dass** die effizienten photovoltaischen Solarzellen-Platten eng nebeneinander angeordnet sind.

10. Kraft-Wärme-Kopplungs-System, **dadurch gekennzeichnet, dass** es die effiziente photovoltaische Solarzellen-Platte nach Anspruch 6 bis 9 verwendet und das Durchgangsrohr (32) über eine Rohrleitung (5) so mit einer Pumpe (6) und einem Wassertank (8) verbunden ist, dass eine kreisförmige Schleife gebildet wird.

11. Kraft-Wärme-Kopplungs-System nach Anspruch 10, **dadurch gekennzeichnet, dass** die Rohrleitung mit einem Luftkühlungs-Wärmetauscher (7) zum Schutz vor Überhitzung ausgeführt ist.

12. Kraft-Wärme-Kopplungs-System nach Anspruch 10 oder 11, **dadurch gekennzeichnet, dass** das Kraft-Wärme-Kopplungs-System die Temperatur der Silizium-Photovoltaikzelle innerhalb von 50°C hält und Warmwasser innerhalb von 45°C erzeugt, wobei als Alternative dazu die Temperatur der amorphen Photovoltaikzelle innerhalb von 90°C gehalten und Warmwasser innerhalb von 80°C erzeugt wird.

## Revendications

1. Dissipateur thermique efficace pour des cellules photovoltaïques solaires, utilisé pour dissiper la chaleur de celles-ci, **caractérisé en ce qu'**il comprend un ou plusieurs caloducs à plaque plane (2), dans lequel une surface de plaque avant des surfaces de plaque avant et arrière de celui-ci s'engage directement ou s'engage indirectement avec la plaque arrière de la plaque de cellule (1), et couvre toute la plaque arrière de la plaque de cellule; et comprend en outre un échangeur thermique (3) de type caloduc à plaque qui s'engage avec la partie de refroidissement de la surface de plaque arrière du caloduc à plaque plane; le caloduc en plaque plate est un réseau de micro caloducs de type plaque plate qui comprend à l'intérieur plus de caloducs disposés côte à côte; l'échangeur de chaleur (3) est un tuyau traversant (32) avec une surface de mise en prise (31) sur un côté de celui-ci; la surface de mise en prise (31) s'étend le long de la direction longitudinale du tuyau traversant (32); le tuyau traversant (32) s'étend à travers les caloducs du caloduc en plaque plate; et le tuyau traversant (32) a une tête de connexion (321) et un orifice de connexion (322) à connecter avec d'autres tuyaux.

2. Dissipateur de chaleur efficace pour des cellules solaires photovoltaïques selon la revendication 1, **caractérisé en ce que** la longueur du caloduc en plaque plane (2) est proche de, mais pas plus grande que, celle de la plaque de cellule (1), et il y a deux ou plusieurs caloducs à l'intérieur du caloduc en plaque plane, et l'expression "mise en prise directe" signifie que deux ou plusieurs caloducs en plaque plane (2) sont disposés étroitement côte à côte, avec une distance entre eux inférieure à 5 mm, et les surfaces de plaque avant de ceux-ci sont étroitement engagées directement avec la plaque arrière de la plaque de cellule (1); l'expression "en prise indirecte" signifie qu'une plaque métallique de bonne conductivité pour l'ensemble de la plaque ou une pluralité de plaques métalliques en prise étroite les unes avec les autres de bonne conductivité dans un ensemble, sont disposées entre la plaque arrière de la plaque de cellule (1) et la surface de la plaque avant d'un ou plusieurs caloducs à plaques plates (2).

3. Dissipateur de chaleur efficace pour cellules solaires photovoltaïques selon les revendications 1 ou 2, **caractérisé en ce que** l'expression mise en prise se réfère à un mise en prise de type sec, sans soudure, ou à un mise en prise au moyen d'un adhésif; la largeur de la surface de mise en prise (31) est comprise entre 20 mm et 300 mm, et le diamètre intérieur du tube traversant est compris entre 5 mm et 60 mm.

4. Dissipateur de chaleur efficace pour des cellules solaires photovoltaïques selon les revendications 1 ou 2, **caractérisé en ce que** l'échangeur de chaleur (3) de type à tube à plaques est un échangeur de chaleur unilatéral conçu avec une surface de mise en prise (31) seulement sur un côté du tube de passage (32), et l'épaisseur de paroi du tube de passage (32) sur le côté opposé à la surface de mise en prise (31) est comprise entre 1,0 mm et 6 mm; en variante, l'échangeur de chaleur (3) est un échangeur de chaleur bilatéral conçu avec des surfaces de mise en prise séparées des deux côtés par rapport au tuyau de passage (32).

5. Dissipateur de chaleur efficace pour cellules solaires photovoltaïques selon les revendications 1 ou 2, **caractérisé en ce que** le caloduc plat (2) est un réseau de micro caloducs du type plaque plate formé par extrusion ou emboutissage pour métal ou alliage, et la surface de plaque arrière des caloducs plats et la surface de l'échangeur de chaleur (3) à l'exception de la partie de mise en prise sont revêtues d'un revêtement à haut taux de rayonnement; la surface de mise en prise (31) de l'échangeur de chaleur (3) enjambe chaque micro caloduc.

6. Plaque de cellule solaire photovoltaïque efficace, **caractérisée en ce qu'**elle comprend une plaque de cellule, et la plaque de cellule s'engage avec le caloduc à plaque plate du dissipateur de chaleur efficace pour des cellules solaires photovoltaïques selon l'une quelconque des revendications 1 à 5.

7. Plaque de cellule photovoltaïque solaire efficace selon la revendication 6, **caractérisée en ce que** la plaque de cellule et les caloducs à plaque plate (2) qui sont de taille correspondante l'un à l'autre sont assemblés dans leur ensemble à travers un cadre, et le rapport de la largeur de la surface de mise en prise (31) de l'échangeur de chaleur (3) dans le cadre à la longueur des caloducs à plaque plate (2) est de 1/20 à 1/5.

8. Plaque de cellule photovoltaïque solaire efficace selon la revendication 7, **caractérisée en ce que** le rapport de la largeur de la surface de mise en prise (31) de l'échangeur de chaleur (3) dans le cadre à la longueur des tubes de chaleur à plaques planes (2) est de 1/10 à 1/5.

9. Plaque de cellules solaires photovoltaïques à rendement selon les revendications 6 ou 7, **caractérisée en ce que** les plaques de cellules solaires photovoltaïques à rendement sont disposées étroitement côte à côte.

10. Système de production combinée de chaleur et d'électricité, **caractérisé en ce qu'**il utilise la plaque de cellules solaires photovoltaïques à haut rendement selon les revendications 6 à 9, et le tuyau de passage (32) est relié à une pompe (6) et à un réservoir d'eau (8) par une conduite (5) pour former une boucle circulaire.

11. Système de production combinée de chaleur et d'électricité selon la revendication 10, **caractérisé en ce que** la conduite est conçue avec un échangeur de chaleur à refroidissement par air (7) pour la protection contre la surchauffe.

12. Système de production combinée de chaleur et d'électricité selon les revendications 10 ou 11, **caractérisé en ce que** le système de production combinée de chaleur et d'électricité maintient la température de la cellule photovoltaïque en silicium dans les 50°C et génère de l'eau chaude dans les 45°C; en variante, la température de la cellule photovoltaïque amorphe est maintenue autour de 90°C et de l'eau chaude est générée autour de 80°C.
